# EUROPEAN PATENT APPLICATION

(11) **EP 4 473 941 A1**
(43) Date of publication of application: **11.12.2024**
(21) Application number: 24180344.4
(22) Date of filing: 05.06.2024
(51) Int. Cl.: A61C 19/04, A61C 19/045

(54) **DEVICE FOR RECORDING AND TRANSFERRING THE DIGITIZED UPPER ARCH PARALLEL TO THE CAMPER PLANE FOR USE IN A DIGITAL WORKFLOW**

(30) Priority: 09.06.2023 BR 102023011356
(71) Applicant: Souza de Oliveira, Cassis Clay, 79116-270 Campo Grande Mato Grosso del Sur (BR)
(72) Inventor: Souza de Oliveira, Cassis Clay, 79116-270 Campo Grande Mato Grosso del Sur (BR)
(74) Representative: Lorente Berges, Ana

(57) **Abstract**

The present invention relates to a device (1) designed for recording and mounting scanned models in virtual articulators and allows recording the position of the dental arches in relation to the Camper plane, facilitating the analysis and study of dental occlusion. It also allows for the design, planning, waxing, and execution of temporary and permanent prostheses of clinical cases virtually after study in computer design programs. It finds application in the digital workflow with the scanning of the patient's face with the presented device enabling the merging of images obtained by intraoral and extraoral scanning. It will be of great application in dental, physiotherapy, maxillofacial surgery, orthodontics, dental aligners, orthopedics, speech therapy clinics, and dental prosthesis laboratories.

## Description

The present invention belongs to the field of devices designed for recording and mounting scanned models in virtual articulators, allowing the recording of the position of the dental arches in relation to the Camper plane, facilitating the analysis and study of dental occlusion. It also allows for the design, planning, waxing, and execution of temporary and permanent prostheses of clinical cases virtually after the study in computer design programs. It finds application in the digital workflow and will be of great application in dental clinics, physiotherapy, surgeries, orthopedics, speech therapy, and dental prosthesis laboratories.

The advent of digital dentistry with the scanning of dental arches, the overlay of tomographic and magnetic resonance images with face scanning allows for a digital 3D visualization or by digitizing the patient's plaster models in a bench scanner to obtain virtual models to be worked on in dental programs and applications associated with photographs, videos, tomography, and magnetic resonance images of the patient for planning and making necessary prostheses and orthoses to achieve treatment objectives previously impossible to visualize.

The use of 3D models currently in dentistry is an irreversible reality, and the advantages are immeasurable. The present invention contributes by facilitating the reproduction of the positioning of dental arch models in a virtual articulator from a bench-scanned model or digitally scanned in the mouth.

We do not find in the prior art any product with the same design and functionality as the one presented here.

The scanning of the patient's face with the presented device allows the merging of images obtained by intraoral and extraoral scanning. This is the scope of this invention.

Technology has entered dental laboratories and clinics, speeding up the production process and the precision of devices and prostheses, increasing productivity, improving predictability and aesthetics, greater social reach due to the ease of making, reducing the number of consultations and consequent possibility of cost reduction, and more comfort for the patient.

The present device allows positioning the patient's dental arch models with extreme precision in relation to the Camper plane, analyzing the patient's occlusal plane in relation to it, and thus planning the design of the appliance or prosthesis to correct the patient's occlusal plane, indicating the appropriate means to solve the patient's problems.

The described invention aims to relate the virtual models to the anatomical points in the right and left tragus and the anterior nasal spine, the Camper Plane.

The use of the said device is characterized by eliminating the need to mount digital models in a virtual articulator embedded in existing dental programs and applications for various specialties.

Mounting models in a virtual articulator embedded in dental programs and applications is a meticulous operation and requires many maneuvers that demand significant time and specific training for mastery.

The programs and applications were developed to perform practically everything within the specialty for which they were designed. For this, it is necessary that the provided virtual models accurately represent the clinical situation present in the patient's mouth. This is the purpose of the present invention, and thus after the virtual project and design, the final prosthesis will be obtained through two different technologies: milling (subtractive technique) and printing (additive technique).

The constructive arrangement described herein is comprised of: a body (1), a fixed anterior part of the left horizontal rod (2), a calibrated part of the left horizontal rod (3), an extendable posterior part of the left horizontal rod (4), the scanning body at the third nasion point (5), an adjustable platform of the third nasion point (6), a left olive (7), a left horizontal rod (8), a right olive (9), a right horizontal rod (10), , an extendable posterior part of the right horizontal rod (11), a calibrated part of the right horizontal rod (12), a fixed anterior part of the right horizontal rod (13), an anterior central vertical rod (14), the high-relief groove (15), and the low-relief groove (16).

The invention can be better understood through the detailed description of the Figures presented in the annex, where:

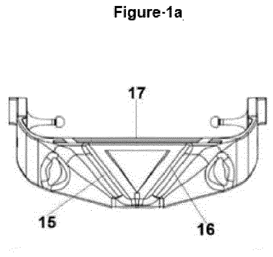

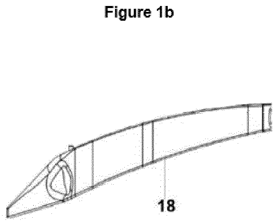

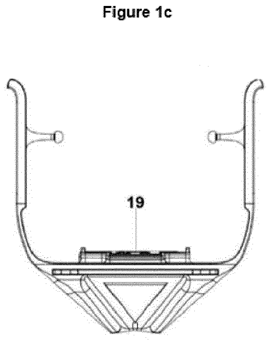

**Figure 1** shows the body of the device (1) in elevation (17), profile (18), and plan (19) with the high-relief groove (15) and the low-relief groove (16) which, once scanned and digitized, will be transferred to the dental program or application embedded in the computer. These grooves are already embedded in the said program or application, allowing the merging, and joining with high precision (given the distance of the teeth and the grooves allows for more precise triangulation) of the scanned images as well as the scanned dental arches with the said device (1).

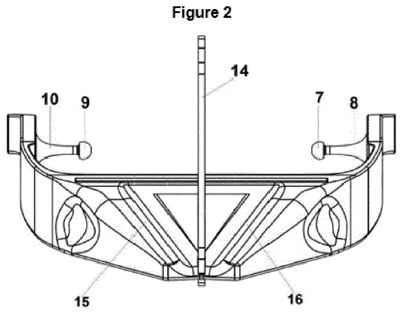

**Figure 2** shows a front view of the mounted device (1) where we can see its parts: the left olive (7), the left horizontal rod adjustable horizontally (8), the right olive (9), the right horizontal rod adjustable horizontally (10), and the anterior central vertical rod (14) positioned in the frontal and middle region of the device body (1) serving to centralize it in relation to the midline of the patient's face. The tapered shape or can be rounded for the anterior part and the high-relief groove (15) and the low-relief groove (16) confer precision and reproducibility in the scanning and fidelity in the merging and joining process of digitized images.

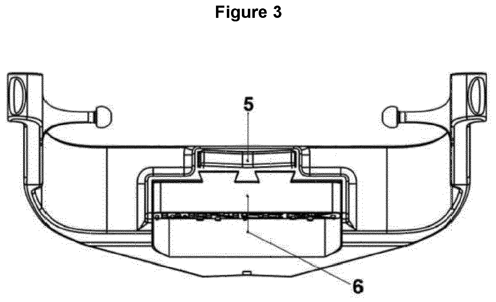

**Figure 3** shows a rear view of the mounted device (1) with a system for fitting and adjusting in the movable part of the nasion point support (5), which consists of a movable device in the anteroposterior direction that adjusts to the nasion point and the adjustable platform in the anteroposterior direction of the adjustable nasion point platform (6).

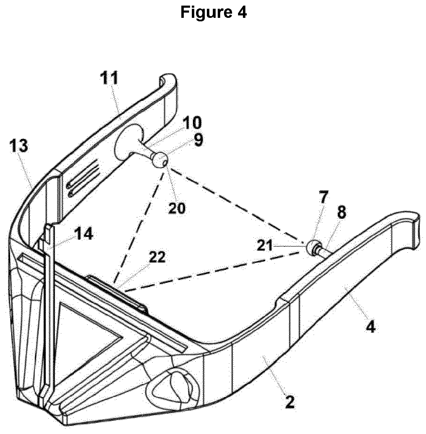

**Figure 4** shows a perspective view of the complete device where we can see its parts: device body (1), fixed anterior part of the left horizontal rod (2), extendable posterior part of the left horizontal rod (4), left olive (7), left horizontal rod (8), right olive (9), right horizontal rod (10), extendable posterior part of the right horizontal rod (11), fixed anterior part of the right horizontal rod (13), anterior central vertical rod (14), and the triangle formed by the three points (20), (21), and (22) represented by the dashed line representing the patient's Camper plane.

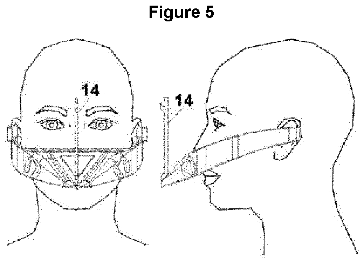

**Figure 5** shows the device (1) positioned on the patient's face in frontal and lateral views with the anterior vertical rod (14) centered on the patient's face.

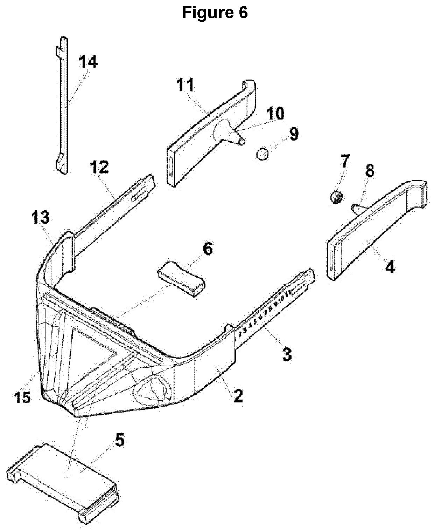

**Figure 6** shows an exploded view of the device where we can see all its parts: device body (1), fixed anterior part of the left horizontal rod (2), calibrated part of the left horizontal rod (3), extendable posterior part of the left horizontal rod (4), movable part of the scanning body at the third nasion point (5), presenting in the lower part the defined geometric shapes to be scanned, adjustable platform of the nasion point (6), left olive (7), left horizontal rod (8), right olive (9), right horizontal rod (10), extendable posterior part of the right horizontal rod (11), calibrated part of the right horizontal rod (12), fixed anterior part of the right horizontal rod (13), anterior central vertical rod (14), high-relief grooves (15), and low-relief grooves (16) in the anterior upper and external part. The posterior internal part presents the fitting for the movable part that supports the nasion point platform (6).

The tapered shape for the anterior part and the high-relief groove (15) and the low-relief groove (16) confer precision and reproducibility when scanned and fidelity in the merging and joining process of digitized images.

The said device (1) with the high-relief groove (15) and the low-relief groove (16) accurately reproduces the patient's Camper plane which, once scanned, will be embedded in the dental program or application along with the scanned dental arches of the patient to perform the planning, design, and execution of the work.

The left horizontal rod may have adjustments in the horizontal direction along its long axis (8), the left horizontal rod may have adjustments in the horizontal direction along its long axis (10), directing in the posterosuperior direction. They present a system in parts (3), (4), (11), and (12) that allows increasing its length so that the left olive (7) and the right olive (9) comfortably fit in the external acoustic meatus, which is a cavity in the respective external ears of the patient.

The fixed anterior part of the left horizontal rod (2) and the calibrated part of the left horizontal rod (3) contain in their distal ends directed towards the internal part the respective left olive (7) and right olive (9) fixed to the right horizontal rod (10) and this fixed to the extendable posterior part of the right horizontal rod (11), which will be fitted in the respective external acoustic meatus of the patient to support and stabilize the said device (1) along with the adjustable platform of the nasion point in the first vertex of the triangle (22).

The movable part of the scanning body at the third nasion point (5) can be adjusted to be very close to the anterior-superior teeth during scanning, and the adjustable platform of the nasion point (6) stabilizes the set during scanning. The anterior central vertical rod (14) is fixed in the midline in the anterior region of the device body (1) and aims to centralize it in relation to the midline of the patient's face individually.

The device body (1) with the high-relief groove (15) and the low-relief groove (16) in the external part. The posterior internal part presents the fitting for the movable part of the scanning body at the third nasion point (5) that supports the adjustable platform of the nasion point (6).

The calibrated part of the left horizontal rod (3) serves to adjust the distance from the nasion point in the second vertex of the triangle (21) to the external acoustic meatus on this side, and the calibrated part of the right horizontal rod (12) serves to adjust the distance from the nasion point (20) in the third vertex of the triangle (20) to the external acoustic meatus on this side.

The extendable posterior part of the left horizontal rod (4) with the left olive (7) and the left horizontal rod (8) allow the adjustment of the left olive (7) to the external acoustic meatus on this side, and the extendable posterior part of the right horizontal rod (11) with the right olive (9) and the right horizontal rod (10) allow the adjustment of the right olive (9) to the external acoustic meatus on this side.

The movable part of the nasion point platform support (5) serves as a support for the adjustable platform of the nasion point (6) in the region of the anterior nasal spine.

The anterior central vertical rod (14) aims to centralize the compact device to the midline of the patient's face.

The triangle formed by the three points (20), (21), and (22) forms a plane in space and accurately reproduces the Camper plane of the patient individually, which is the main objective of the said device (1).

The first nasion point forms the first vertex of the triangle (22), the second nasion point on the left olive (7) forms the second vertex of the triangle (21), and the third point on the right olive (9) forms the third vertex of the triangle (20). When the olives (7) and (9) fit into the respective external acoustic meatus on the right and left, and the first vertex of the triangle (22) supported on the nasal platform (6) fits into the internal posterior face of the device body (1), recording the Camper plane of the patient individually.

In conclusion, the present invention deals with a device designed for recording and mounting scanned models in virtual articulators, allowing the recording of the position of the dental arches in relation to the Camper plane, facilitating the analysis and study of dental occlusion. It also allows for the design, planning, waxing, and execution of temporary and permanent prostheses of clinical cases virtually after the study in computer design programs. It finds application in the digital workflow of dentistry and will be of great application in dental clinics and dental prosthesis laboratories. However, its measures and dimensions may vary according to the need.

All these attributes allow classifying it as practical, efficient, safe, economical, and innovative, perfectly fitting the criteria that define a patent of invention, and its claims will be described below.

## Claims

1. A device for recording and transferring the scanned and digitized upper arch parallel to the Camper plane for use in the digital workflow for study, planning, and execution of dental, physiotherapy, surgical, orthopedic, speech therapy works and in dental prosthesis laboratories, designed for recording and mounting scanned models in virtual articulators, and allowing recording the position of the dental arches in relation to the Camper plane, the device comprising:
∘ a body (1);
∘ a fixed anterior part of the left horizontal rod (2);
∘ a calibrated part of the left horizontal rod (3);
∘ an extendable posterior part of the left horizontal rod (4);
∘ a scanning body at the third nasion point (5);
∘ an adjustable platform of the third nasion point (6);
∘ a left olive (7);
∘ a left horizontal rod (8);
∘ a right olive (9);
∘ a right horizontal rod (10);
∘ an extendable posterior part of the right horizontal rod (11);
∘ a calibrated part of the right horizontal rod (12);
∘ a fixed anterior part of the right horizontal rod (13);
∘ an anterior central vertical rod (14);
∘ a high-relief groove (15); and
∘ a low-relief groove (16).

2. The device according to claim 1, wherein the left horizontal rod (8) and the right horizontal rod (10) are directed posterosuperiorly and present a system that allows increasing their length so that the left olive (7) and the right olive (9) comfortably fit in the patient's external acoustic meatus.

3. The device according to claim 1, wherein the fixed anterior part of the left horizontal rod (2) and the calibrated part of the left horizontal rod (3) contain at their distal ends directed towards the internal part the respective left olive (7) and right olive (9), which are fitted in the respective external acoustic meatus of the patient to support and stabilize the device (1) along with the adjustable platform of the nasion point (20).

4. The device according to claim 1, wherein the movable part of the nasion point platform support (5) and the adjustable platform of the nasion point (6) show the extendable part of the horizontal rod that is adjusted so that the left olive (7) and the right olive (9) fit the patient's external acoustic meatus.

5. The device according to claim 1, wherein the extendable posterior part of the left horizontal rod (4) is fixed in the midline in the anterior region of the device body (1), and centralizes it in relation to the midline of the patient's face individually.

6. The device according to claim 1, wherein the posterior internal part presents the fitting for the movable part of the nasion point platform support (5), which fits just above the adjustable platform of the nasion point (6).

7. The device according to claim 1, wherein the nasion point platform support (5) is the scanning body and presents in the lower part defined geometric shapes to be scanned.

8. The device according to claim 1, wherein the calibrated part of the left horizontal rod (3 ) adjusts the distance from the nasion point in the first vertex of the triangle (22) to the external acoustic meatus on this side in the second vertex of the triangle (21), and the calibrated part of the right horizontal rod (12) adjusts the distance from the nasion point in the first vertex of the triangle (22) to the external acoustic meatus on this side in the third vertex of the triangle (22).

9. The device according to claim 1, wherein the extendable posterior part of the left horizontal rod (4) with the left olive (7) and the left horizontal rod (8) allow the adjustment of the left olive (7) to the external acoustic meatus on this side, and the extendable posterior part of the right horizontal rod (11) with the right olive (9) and the right horizontal rod (10) allow the adjustment of the right olive (9) to the external acoustic meatus on this side.

10. The device according to claim 1, wherein the movable part is the scanning body itself (5) and the adjustable platform of the nasion point (6) is the third point in the region of the anterior nasal spine.

11. The device according to claim 1, wherein the anterior central vertical rod (14) centralizes the compact device to the midline of the patient's face.

12. The device according to claim 1, wherein the triangle formed by the three points (20), (21) and (22) forms a plane in space that accurately reproduces the Camper plane of the patient individually.

13. The device according to claim 11, wherein the first nasion point forms the first vertex of the triangle (22), the other point on the left olive (7) forms the second vertex of the triangle (21), the third point on the right olive (9) forms the third vertex of the triangle (20) when the olives (9) and (7) fit into the respective right and left external acoustic meatus, and the third point (20) supported on the nasal platform (6) fits into the internal posterior face of the device body (1), recording the Camper plane of the patient individually.
